(19) Europäisches Patentamt
European Patent Office
Office européen des brevets

(11) **EP 2 470 718 B1**

(12) **EUROPEAN PATENT SPECIFICATION**

(45) Date of publication and mention of the grant of the patent:
**29.07.2015 Bulletin 2015/31**

(51) Int Cl.:
*D21H 19/44* (2006.01)        *D21H 19/38* (2006.01)
*C09D 17/00* (2006.01)        *C09C 1/00* (2006.01)
*C09C 3/04* (2006.01)

(21) Application number: **10814222.5**

(22) Date of filing: **24.08.2010**

(86) International application number:
**PCT/US2010/046415**

(87) International publication number:
**WO 2011/028499 (10.03.2011 Gazette 2011/10)**

(54) **NOVEL TREATED MINERAL PIGMENTS FOR AQUEOUS BASED BARRIER COATINGS**

NEUE BEHANDELTE MINERALPIGMENTE FÜR SPERRBESCHICHTUNGEN AUF WASSERBASIS

NOUVEAUX PIGMENTS MINÉRAUX TRAITÉS POUR DES REVÊTEMENTS DE BARRIÈRE À BASE AQUEUSE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **23.08.2010 US 861626
24.08.2009 US 236286 P**

(43) Date of publication of application:
**04.07.2012 Bulletin 2012/27**

(73) Proprietor: **BASF Corporation
Florham Park, NJ 07932 (US)**

(72) Inventors:
• **MATHUR, Sharad
Tega Cay
SC 29708 (US)**
• **BERUBE, Richard
Holmdel
NJ 07733 (US)**
• **FOLMAR, Kenneth, W.
Macon
GA 31210 (US)**
• **SERAFANO, John, D.
Grosse Ile
MI 48138 (US)**
• **KHOKHANI, Ashok
Manalapan
NJ 07726 (US)**
• **RIGNEY, Jennifer
Dearborn
MI 48124 (US)**
• **GODFREY, James, Royce
Tennille
GA 31089 (US)**

(74) Representative: **Herzog, Fiesser & Partner
Patentanwälte PartG mbB
Isartorplatz 1
80331 München (DE)**

(56) References cited:
**EP-A1- 1 403 427        EP-A2- 0 273 583
WO-A1-2009/134538        WO-A1-2010/042162
WO-A2-2010/052571        JP-B2- 4 381 170
US-A- 4 686 260**

## Description

Field of the Invention

This invention is directed to high performance pigment containing coating systems for use in aqueous-based barrier coatings. Specifically, the invention consists of novel pigments and pigment systems and blending technologies applied to aqueous based coating systems that will provide desired properties in paper and paper board based packaging.

Background of the Invention

Corrugated fiberboard containers are used in many high humidity bulk packaging applications such as for fresh fruit and produce items. To overcome the known impairment in the strength of corrugated fiberboard in high humidity service, it is customary to treat such containers, or the corrugated fiberboard sheets or blanks from which the containers are formed, by impregnating them with a material resistant to moisture.

Applications can also include films for food items such as cookie and cracker packaging. In these particular cases, the object of the package is not only to hold the contents, but also to provide resistance to moisture vapor transmission (from the environment to inside the package) which would otherwise diminish the shelf life of the contained cookies, crackers, or the like, where the shelf life is determined by the time it takes the products to pick up sufficient moisture to render them stale.

In cookie and cracker packaging applications, for example, the general object of the barrier layer is to substantially keep moisture out or to slow its ingress.

WO 2010/052571 A2 discloses a coated recyclable paper or paperboard and a method of manufacture thereof comprising coating the paper with an aqueous coating comprising a polymer emulsion and a pigment. WO 2010/042162 A1, on the other hand, relates to a coated paper of paperboard and a method of manufacture comprising coating the paper with a biopolymer layer comprising a biopolymer and a pigment. WO 2009/134538 A1 concerns a water-based barrier composition for applying on paper comprising a polymeric binder and a filler particle. Finally, US 4 686 260 A discloses a water-based printing ink composition containing a pigment and a polymer emulsion which comprises a first polymer network which is intertwined with a second polymer network.

In the past, external coating layers of higher density polyethylenes (HDPE) were needed to achieve a target water vapor transmission resistance (WVTR). Practice often included the addition of a second coating layer to provide other desired properties. These were often relatively poor in HDPE to achieve physical properties such as tear resistance, and/or mechanical properties such as heat seal.

Such combinations typically result in added costs and may affect other important properties necessary to the packaging industry. Therefore, a need exists for a moisture barrier film or container fabricated such that the article will have relatively low WVTR combined with improved physical properties.

Summary of Invention

This invention is directed to novel pigments, pigment systems (including components not classified as pigments) and formulations for use in an aqueous coating system applied onto cellulosic (paper and/or paperboard) and non-cellulosic substrates (polyethylene (PE), polylactic acid (PLA), polyvinyl acetate (PVAc), etc.) to impart barrier properties. This invention is also directed to a paper or paperboard coated with a pigment system in an aqueous coating system.

An embodiment of this invention is directed to a method for preparing an aqueous based coating system for coating onto paper and/or paperboard for providing barrier to liquid, moisture vapor, oil and grease, which comprises mixing a polymer emulsion system or natural-based binding system with a pigment system, wherein the coating system comprises surface treating a pigment prior to mixing the pigment system with the polymer emulsion system or natural binding system, which comprises surface treating the pigment with materials selected from the group consisting of hydrophobically modified polymers, styrene-acrylic resin emulsion, styrene-butadiene latex emulsions, blends of styrene acrylic and styrene butadiene latex emulsions, and silanes, siloxanes, siloxane /silicone resin blends, and their carbon-based analogs.

Another embodiment of this invention is directed to an aqueous based coating system for coating onto paper and/or paperboard for providing barrier to liquid, moisture vapor, oil and grease, which comprises a polymer emulsion system or natural-based binding system and a pigment system, wherein the pigment has been surface treated prior to mixing with the polymer emulsion system or natural-based binding system, wherein the pigment has been surface treated with materials selected from the group consisting of hydrophobically-modified polymers, styrene-acrylic resin emulsion, styrene-butadiene latex emulsions, blends of styrene acrylic and styrene butadiene latex emulsions, and silanes, siloxanes, siloxane / silicone resin blends, and their carbon based analogs.

According to a preferred embodiment thereof, the aqueous based coating system comprises a pigment system, a crosslinker, a polymer emulsion or natural-based binding system that has been hydrophobized by the addition of materials selected from the group consisting of silanes, siloxane, siloxane / silicone resin blends, and their carbon-based analogs and optionally, defoaming agent, wherein one or more components of the pigment system has been surface treated.

According to a further preferred embodiment thereof, the aqueous based coating system comprises a hydrophobized pigment system; a water based binder system, a defoaming agent, a thickening agent and optionally, a crosslinker.

According to a further preferred embodiment thereof, the aqueous based coating system comprises a pigment system whereby a pigment in the pigment system has been thermally treated prior to surface treatment with a polydimethylsiloxane / high molecular weight silicone resin blend.

As used herein, the term pigment refers to minerals as known to one skilled in the arts as, for example, kaolin, bentonite, mica, talc, attapulgite and zeolite, in their natural or synthetic form and any combination thereof. Pigment systems refer to pigments that have been surface treated to enable or improve barrier properties. The surface treatment comprises of various materials known to one skilled in the art, for example, surfactants, hydrophobically-modified polymers, styrene-acrylic resin emulsion, styrene-butadiene latex emulsions, blends of styrene acrylic and styrene butadiene latex emulsions, and silanes, siloxanes, siloxane / silicone resin blends, and their carbon-based analogs. The term pigment and pigment system may at times be used interchangeably, as the person skilled in the art will appreciate the terms as used in their respective contexts.

As used herein, the term polymer emulsion or latex includes materials such as styrene-acrylic resin emulsion, styrene-butadiene latex emulsions, and blends of styrene acrylic and styrene butadiene latex emulsions. Monomers suitable for use in the production of emulsion systems for paper coating or binding formulation can generally be ethylenically unsaturated monomers including styrene, butadiene, vinyl acetate, carboxylic acids, (meth)acrylic acid esters, (meth)acrylamide, and (meth)acrylonitrile. As used herein, the term natural-based binding system is known to one skilled in the art as, for example, starches, proteins and caseins. Polymer emulsion system refers to polymer emulsions and various additives, such as a cross linker or a defoamer, that when combined with the pigment system make the coating system.

As used herein, the term emulsion system refers to various emulsions for combining with the pigment system to develop the coating system. Emulsion systems (also commonly referred to as latexes) comprise styrene-acrylic resin emulsion, styrene-butadiene latex emulsions, blends of styrene acrylic and styrene butadiene latex emulsions etc. Monomers suitable for use in the production of emulsion systems for paper coating or binding formulation can generally be ethylenically unsaturated monomers including styrene, butadiene, vinyl acetate, carboxylic acids, (meth)acrylic acid esters, (meth)acrylamide, and (meth)acrylonitrile.

As used herein, the term inorganic materials includes materials such as carbides, oxides and nitrides.

Description of the Invention

This invention is related to a pigment and a coating system design that significantly slow the transportation kinetics of target species such as liquid, moisture vapor, oil and grease. It involves manipulation of the physical attributes of elements of the aqueous coating system; specifically the pigment system being used and / or the binder system being employed.

The physical attributes desired in the pigment must meet at least one of the following:

- The pigments having acceptable morphology appropriate to a given application.
- Controlled surface area, engineered morphology particles;
- Ultrafine size particles;
- Highly porous particles having pore size distribution and surface area tailored to the target barrier coating application; and
- High surface area particles.

The pigment may also undergo a thermal treatment process and then, with or without the thermal treatment, is subjected to a surface treatment that will facilitate repulsion of water and/or significantly slows the rate of diffusion of the target species (high surface tension or contact angle). Surface treatments may include but are not limited to:

- Surfactants such as stearates;
- Hydrophobically modified polymers such as polyethylenimine (PSI);
- Styrene-acrylic resin emulsion chemistries;
- Styrene-butadiene latex chemistries;
- Synergistic blends of styrene acrylic and styrene butadiene latex chemistries; and

- Surface treatments including but not limited to silanes, siloxanes, siloxane / silicone resin blends, and their carbon-based analogs

The pigment system is typically a stable slurry that can contain any of the combination of pigments described above as well as a dispersant, an optional defoamer and a thickener. The dispersant can be a latex, starch or polyvinyl alcohol (PVAL). Natural thickening aids such as starch or protein or synthetic polymers such as Sterocoil FS (available from BASF Corporation) can be used to thicken / stabilize the pigment system.

The barrier coating formulation consists of the pigment system, an optional defoamer/deaeration/antifoam agent, a cross linker (glyoxal or AZC for example), and a binder. The binder is can be a styrene acrylic resin emulsion (SA), a styrene butadiene latex (SB latex), PVAL, starch, protein and a combination thereof which additionally also contributes to the barrier properties.

To further illustrate the present invention, various examples are given below. Throughout these examples, as well as the rest of the specification and claims, a variety of coating systems were made and evaluated. These systems contain both latexes and pigment systems (unless otherwise specified). The water resistance of the coatings was measured using the Cobb method described by TAPPI method T 441.

Example 1 - Styrene Acrylic Resin Emulsion / Kaolin Coatings

Eight kaolin-based pigment systems were developed and tested in a coating system comprised of 50 parts (dry basis) (styrene acrylic latex emulsion (SA), 50 parts pigment system (dry basis) and 0.001% defoamer. The SA utilized in this testing phase was a blend of commercially available styrene acrylic resin emulsions produced by BASF Corporation. It is characterized by a solids content of 46% by weight, a pH of 8.3, an acid number of 75 and a Tg(C) of 19. It was designed to give good water and grease resistance to food packaging.

The SA emulsion and defoamer (Octafoam DFI - 51 by Hi Mar Specialty Chemicals) were weighed into a small stainless steel beaker and mixed with a Dispermat mixer fitted with a saw toothed blade. Mixing speed was ramped up until a vortex was created at the agitator shaft. The pigment system was added gradually into the liquid vortex. Once addition was complete, the mixer speed was increased to 1200 rpm and the coating system was allowed to disperse for 10 minutes. The total sample size was approximately 100g. Coating system solids were targeted at 59.0 percent.

For purposes of this invention, an embodiment of the pigments / pigment systems used in this study are described in Table 1 (below), Two commercially available kaolin pigments were used in the study. The kaolin pigment is platy, having a particle size of 50% by weight finer than 2 micrometers, which is referred to herein as coarse kaolin. The product was initially dried in a flocculated state (3.2 pH) and then dispersed in water with sodium hydroxide to a 7.0 pH. This slurry was then subjected to surface treatment. The fine kaolin pigment is platy, having a particle size of 90% by weight finer than 2 micrometers and an intermediate aspect ratio. The product was initially dried in a flocculated state (3.2 pH).

Surface treatments included in the study:

- Treatment A: A blend of commercially available SA emulsions (available from BASF Corporation) was used. The composite was formulated for special grease resistance for surface sizing using a process known to the skilled artisan. The resulting product has a pH of 7.3, Acid Number of 108 and a Tg(C) of 14.0. 1.0 weight percent of the SA emulsion was added to the kaolin.
- Treatment B: A small particle size, very low VOC polyethylene/ paraffin wax emulsion (BASF Corporation) designed for water shedding, heat release and low COF with FDA acceptability was used. The product pH was 9.0, Acid Number of 56, and a Tg(C) of 0.08. 1.0 weight percent of the polyethylene/ paraffin wax emulsion was added to the kaolin.
- Treatment C: A general purpose, soft film forming SA emulsion (BASF Corporation) for use in water based flexo and gravure inks on flexible films and foil. The product pH was 8.3, Acid Number of 50, and A Tg(C) of -30. 1.0 weight percent of the SA emulsion was added to the kaolin.
- Treatment D: A soft film forming acrylic emulsion (available from BASF Corporation) that provides film formation, excellent rub resistance, water and grease resistance was used. The product pH was 8.3, Acid Number of 50, and a Tg(C) of -16. 1.0 weight percent of the acrylic emulsion was added to the kaolin.
- Treatment E: An experimental hydrophobized polyethylenimine (PEI) (MW = 800 g/mol) modified with 20% addition of lauric acid (MW = 1550 g/mol) was used. 0.5 weight percent of the PEI (dry on dry basis) was added to the kaolin.
- Treatment F: An experimental hydrophobized polyethylenimine (PEI) (MW = 5000 g/mol) modified with 20% addition of stearic acid (MW = 9660 g/mol) was used. 0.5 weight percent of the PEI (dry on dry basis) was added to the kaolin.

Table 1

| B | Coarse kaolin / Treatment A |
|---|---|
| C | Coarse kaolin / Treatment B |
| D | Coarse kaolin / Treatment C |
| E | Coarse kaolin / Treatment D |
| F | Coarse kaolin / Treatment E |
| G | Coarse kaolin / Treatment F |
| H | Fine Kaolin / Treatment E |

The coatings were applied to a kraft paper, with characteristics described in Table 2.

Table 2 - Characteristics of Kraft Paper

| Basis weight (g/m$^2$) | 100 |
|---|---|
| Roughness (mm) | 7.3 |
| Bendtsen permeance (ml/min) | 4464 |

The kraft paper selected had a relatively high permeance. As such, a prime coat of a blend of commercially available SA emulsions was applied to each kraft sheet to be coated. The blended product pH was 8.3, Acid Number was 75 and had a Tg(C) of 19.0. This first layer was applied with a #2 Meyer Rod (wire wound bar) on a K-Coater and dried for 1 minute at 50 °C. The resultant coating weights were 3.0 g/m$^2$ of dry coating.

Each experimental coating system was applied to the pre-coated kraft base sheet with a #3 Meyer Rod and dried 1 minute at 50 °C targeting a coating weight of 13.0 g/m$^2$ dry coating. The test sheets were then allowed to equilibrate in a constant temperature and humidity environment at 25.5°C and 40% R.H. before testing.

The control for this series of tests was prepared by coating the same kraft paper twice with SA emulsion blend used to precoat the kraft base paper. This yielded the same total dry coat weight as applied to experimental samples containing 50 weight percent pigment in coating systems.

Water barrier properties were assessed by running the Cobb test according to TAPPI method T 441, with a test area of 100 cm$^2$ and a test time of 2 minutes. To summarize, a 100 cm$^2$ circle is cut from the coated sheet and weighed to 0.0001 g. The sample was then placed into a test jig coated side up and a metal ring clamped over it. 100 mL of water was poured into the ring and allowed to sit for 2 minutes. At that time, the water was poured out, the sample unclamped and surface dried off with blotting paper and a controlled weight, and the sample reweighed. The "Cobb value" is a measure of how much water the sample has absorbed and is calculated by the equation:

$$\text{Cobb} = \frac{mass_{aftersoak} - mass_{initial}}{area}$$

Results are reported in units of g/m$^2$. Lower Cobb values indicate greater water resistance.

In this round of testing, three samples of each coating system were measured. The results of the Cobb tests are summarized below in Table 3.

Table 3 Water resistance - 2 minute Cobb

| ID | Sample Composition | 2 min Cobb (g/m$^2$) |
|---|---|---|
| B | Coarse kaolin / Treatment A | 4.3 |
| C | Coarse kaolin / Treatment B | 13.1 |
| D | Coarse kaolin / Treatment C | 5.9 |
| E | Coarse kaolin Treatment D | 19.2 |
| F | Coarse kaolin / Treatment E | 13.9 |

(continued)

| ID | Sample Composition | 2 min Cobb (g/m$^2$) |
|---|---|---|
| G | Coarse kaolin / Treatment F | 6.2 |
| H | Fine kaolin / Treatment E | 44.4 |
| Control | Pre-coat SA emulsion blend | 66.0 |

Coating systems B, C, D, F, and G offered the most significant improvement in Cobb and were statistically better than the control. All of the pigments in the pigment systems are considered coarse and platy for purposes of this invention. Synergies were also seen when a styrene acrylic resin emulsion was used for surface treatment. The surface treatment process was of significant Importance. Here, the kaolin pigment was first mixed with SA emulsion forming a slurry (15 to 60 percent solids). The slurry was then dried to both encapsulate and anchor the treatment onto the surface of the pigment. This allowed the unique physical properties of a pigment system to take on chemical characteristics of the SA resin coating.

A second unexpected finding was the ease in which hydrophobically treated kaolin pigments can be dispersed into a styrene acrylic resin emulsions. No extensive work input (shear) or temperature manipulation was required to effect formation of a stable slurry. There was no evidence of a chemical interaction during the mixing process as well. In summary, correctly formulated coatings can be pigmented to give improved water resistance.

There are a range of styrene acrylic resin (SA) emulsions available in the marketplace. The performance factors engineered into the emulsion Tg(C), acid number, viscosity, etc) can greatly influence the barrier performance factors of a given coated substrate. To further demonstrate the viability of the findings in Example 1, the study was repeated with coating prepared using Epotal S 440 styrene acrylic resin emulsion from BASF Corporation. Epotal S 440 is a soft film forming emulsion engineered for direct contact with food. The product pH is 8.0, Acid Number of 64, and a Tg(C) of -27.

Example 2 - Coatings with Treated Kaolin Pigment System and Epotal S 440

Eleven kaolin-based coating samples were prepared and analyzed during this study.

Surface treatments included in the study:

• Treatment A: A blend of commercially available SA emulsions from BASF Corporation was used. The product had a pH of 7.3, Acid Number of 108 and a Tg(C) of 14.0. 1.0 weight percent of this product was added to kaolin.

• Treatment B: A commercially available (BASF Corporation) small particle size, very low VOC polyethylene/ paraffin wax emulsion designed for water shedding, heat release and low COF with FDA acceptability. The product pH was 9.0, Acid Number of 56, and a Tg(C) of 0.08. 1.0 weight percent of this product was added to kaolin.

• Treatment C: A commercially available (BASF Corporation), general purpose, soft film forming SA emulsion for use in water based flexo and gravure inks on flexible films and foil was used. The product pH was 8.3, Acid Number of 50, and A Tg(C) of -30. 1.0 weight percent of this product added to kaolin.

• Treatment D: A commercially available,soft film forming acrylic emulsion (BASF Corporation) that provides film formation, excellent rub resistance, water and grease resistance was used. The product pH was 8.3, Acid Number of 50, and a Tg(C) of -16. 1.0 weight percent of this product was added to kaolin.

• Treatment E: An experimental hydrophobized polyethylenimine (PEI) (MW = 800 g/mol) modified with 20% addition of lauric acid (MW = 1550 g/mol) was used. 0.5 weight percent of the PEI (dry on dry basis) was added to the kaolin.

• Treatment F: An experimental hydrophobized polyethylenimine (PEI) (MW = 5000 g/mol) modified with 20% addition of stearic acid (MW = 9660 g/mol) was used. 0.5 weight percent of the PEI (dry on dry basis) was added to the kaolin.

• Treatment H. Commercially available siloxane hydrophobizing substituents (from Momentive Performance Materials). 2.0 weight percent of this product was added to kaolin.

The coarse, platy hydrous kaolin pigment described In Example 1 was used in nine of the pigment systems for this study. Sample B, Translink 37, Is a commercially available calcined kaolin that has been surface treated with siloxane based hydrophobizing chemistry. This BASF pigment does not have a platy or coarse morphology. In Sample P, the dispersion chemistry of the coarse, platy hydrous kaolin pigment was modified to include a sodium polyacrylate (molecular weight in the 3500 range).

The coatings tested in this report were comprised of 50% pigment system (dry basis), 50% Epotal S 440 (on a wet basis), and 0.1 parts Octafoam DFI - 51 defoamer by Hi Mar Specialty Chemicals. Target coating solids were 59.0%. Epotal S 440 has a solids content of 49.4 wt %, so the total weight of the emulsion was 20.24 parts.

Epotal S 440 and the defoamer were weighed into a small stainless steel beaker and mixed with a Dispermat mixer fitted with a toothed blade at a relatively low speed to start. The pigment system was added gradually into the vortex, and once the full amount had been added, the mixing speed was increased to 1200 rpm and mixing proceeded for10 minutes. It was also necessary to add some water to these samples to maintain a workable viscosity of 1000 cps. The total sample size was approximately 100g. The pigments used in this study are described below:

Table 4

| B | Translink 37 |
|---|---|
| C | Coarse kaolin untreated |
| D | Coarse kaolin / Treatment H |
| F | Coarse kaolin / Treatment A |
| G | Coarse Kaolin / Treatment B |
| H | Coarse kaolin / Treatment C |
| I | Coarse kaolin / Treatment E |
| J | Coarse kaolin / Treatment F |
| K | Sodium polyacrylate dispersed coarse kaolin untreated |

With the exception of C and K, all kaolin pigments were surface treated.

All pigment samples readily dispersed and demonstrated good shelf stability. A few displayed some syneresis with softly settled pigment that was easily stirred back in. The coating made with pigment system D, however, had a layer of firmly settled pigment at the bottom which required some energy to stir and shake back into the liquid phase - a characteristic of well dispersed samples.

The coatings were tested on kraft paper, with characteristics described in Table 5:

Table 5

| Basis weight (g/m$^2$) | 100 |
|---|---|
| Roughness (mm) | 7.3 |
| Bendtsen permeance (mL/min) | 4464 |

Because the paper had a relatively high permeance, a prime coat of Epotal S440 was first diluted to 31 % solids and applied to every sheet before the experimental coating. This first layer was applied with a #2 Meyer Rod on the K-Coater, and dried for 1 minute at 50°C, yielding a dry coating weight of 3.0 g/m$^2$. Each experimental coating was then applied with a #3 Meyer Rod and dried 1 minute at 50°C, yielding a dry coating weight of 13.0 g/m$^2$. The test sheets were allowed to equilibrate in a constant temperature and humidity environment at 25.5°C and 40% R.H. before testing.

The control for the pigmented coatings was generated using 100% undiluted Epotal S 440, which conveniently had the same solids content as the pigmented coatings. The control kraft sheets were first prime coated with diluted Epotal S 440 and then coated (one coat) of the undiluted emulsion equivalent to 13.0 gm$^2$ of dry coating.

The results of the Cobb tests are summarized below in Table 6.

Table 6 - Water Resistance vs. Pigment System

| ID | Sample Composition | 2 min Cobb g/m$^2$ |
|---|---|---|
| B | Translink 37 | 1.4 |
| C | Coarse kaolin Untreated | 7.5 |
| D | Coarse kaolin / Treatment H | 3.0 |

(continued)

| ID | Sample Composition | 2 min Cobb g/m$^2$ |
|----|----|----|
| F | Coarse kaolin / Treatment A | 2.1 |
| G | Coarse kaolin / Treatment B | 2.4 |
| H | Coarse kaolin / Treatment C | 2.1 |
| I | Coarse kaolin / Treatment E | 1.5 |
| J | Coarse kaolin / Treatment F | 1.0 |
| K | Sodium Polyacrylate dispersed coarse kaolin untreated | 6.3 |
| L | Control - 100% Epotal S 440 | 3.9 |

All of the coating systems containing surface treated pigment systems outperformed the control. The performance of Pigment B, Translink 37, points to a finding that, once surface treated, calcined kaolin can be effectively utilized in water barrier applications. This is a significant finding in the development of water barrier coating systems.

The benefit of using the styrene acrylic resin emulsion used as a surface treatment was confrmed in this study. The Cobb values of the two coating systems containing untreated coarse and platy morphology (Coatings C and K) were poorer than Epotal S 440 control (Coating L). The Cobb values on the same kaolin pigment when surface treated with styrene acrylic resin emulsion (Coatings F, G, and H) were all better than the Epotal S 440 control coating.

When comparing the results from Examples 1 and 2, the impacts of the pigment systems are similar. When comparing styrene acrylic resin emulsions, the Epotal S 440 makes much more water resistant coatings. This could be due to the lower Tg(C) of Eoptal S 440 (-27°C vs. 19°C), as softer polymers tend to form more continuous films when dried.

Example 3 - Hydrophobizing Styrene Acrylic Resin Emulsions

Examples 1 and 2 demonstrated the ease in which hydrophobically surface treated pigments could be dispersed in styrene acrylic resin emulsion. A number of studies were subsequently conducted to determine whether this finding could be extended to develop a method for hydrophobizing a styrene acrylic resin emulsion in lieu of surface treating the pigment component of the barrier coating system. Silane, siloxane, and poly-dimethyl siloxane, / silicone resin hydrophobic surface treatments were used with Epotal s 440 and other commercially available styrene acrylic resin emulsions from BASF Corporation.

In Table 7 (below), Epotal S 440 was incrementally treated with commercially available poly-dimethyl siloxane hydrophobizing substituents from Momentive Performance Materials. The treatment was added to the Epotal S 440 under mild agitation at room temperature. No evidence of a chemical reaction was observed during the treatment process.

A commercially available uncoated board base paper from MeadWestvaco was then coated. The test sheets were allowed to equilibrate in a constant temperature and humidity environment at 25.5°C and 40% R.H. and were then subjected to Cobb testing (TAPPI Method T441). The data clearly demonstrates the benefits of the treatment method.

Table 7

| Sample ID | Coat weight (g/m$^2$) | 30 Minute Cobb Avg g/m$^2$ |
|----|----|----|
| Raw Base stock | 0.0 | 80.65 |
| J3030 control | 20.2 | 5.10 |
| Joncryl 3030 with 0.25 part of hydrophobizing chemistry. | 19.6 | 7.10 |
| Joncryl 3030 with 0.50 part of hydrophobizing chemistry | 21.0 | 9.80 |
| Joncryl 3030 with 0.75 part of hydrophobizing chemistry | 20.2 | 7.55 |
| Joncryl 3030 with 1.0 part of hydrophobizing chemistry | 20.3 | 3.70 |
| Joncryl 3030 with 1.25 part of hydrophobizing chemistry | 20.4 | 3.70 |
| Joncryl 3030 with 1.50 part of hydrophobizing chemistry | 19.1 | 4.10 |
| Joncryl 3030 with 1.75 part of hydrophobizing chemistry | 19.4 | 3.00 |
| Joncryl 3030 with 2.0 part of hydrophobizing chemistry | 20.5 | 3.65 |

Example 4: Coatings Systems Compared for both Water and Water Vapor Transmission Rates.

A series of evaluations were conducted to test the water resistant coating systems to water vapor barrier coatings. In this example, three styrene acrylic resin emulsions and two kaolin based pigment systems were evaluated. Binding systems selected were:

- Epotal S 440: A commercially available a soft film forming SA emulsion engineered for direct contact with food. The product pH was 8.0, Acid Number of 64, and a Tg(C) of -27° C .

- Resin Emulsion A: A water based, high performance, hybrid RC acrylic emulsion polymer offered by BASF Corporation. It is typically 40% solids, and was used as received. Its Tg(C) were 15° C. and 80° C with an average particle size obtained from PCS of 163 nm. This emulsion offered improved resistance properties and low COF.

- Copolymer A: An aqueous copolymer dispersion of butyl acrylate and styrene offered commercially by BASF Corporation. Its target use is in ceramic tile mastic adhesives, primers and other construction adhesives. Benefits include good water resistance and strength.

The coating substrate was a heavyweight kraft liner. The curve of the sheets and the difference in water beading behavior between the different sides of the sheets suggested that it had undergone some type of surface treatment. Other characteristics are described below in Table 8.

Table 8 - Base Paper Properties

| | |
|---|---|
| Caliper | 385 $\mu$m |
| Basis weight | 260 g/m$^2$ |
| Roughness | 8.95 $\mu$m |
| Permeance - Gurley | 66.7 seconds |
| Permeance - Bendtsen | 178.2 ml/min |

Pigments were limited to kaolin that were coarse and platy (described in Examples 1 and 2) that was dried in a flocculated state (3.2 pH) and Translink 37. Coating systems were made by mixing the pigments into the target binding system with a small amount of defoamer (less than 0.20 parts) and enough water to bring the coatings to 50% solids by weight. The pigment to binder (P/B) ratio of the coatings was 1:1.

Coating systems were prepared by weighing the binder system and defoamer (Octafoam DFI - 51 by Hi Mar Specialty Chemicals) into a small beaker. The beaker contents were agitated by a Dispermat mixer fitted with a saw toothed blade. Mixing speed was ramped up until a vortex was created at the agitator shaft. The pigment system was added gradually into the vortex, and once the full amount had been added, the mixing speed was increased to 1200 rpm and the slurry allowed to mix for 10 minutes. The total sample size was approximately 100g. Coating system solids were targeted at 59.0 percent.

The coatings were applied with wire-wound bars chosen to give the target dry coating weight. To get 10 g/m$^2$ coat weight with coatings at 50% solids, a K3 applicator bar was used. The coated sheets were dried in the 50 °C oven for 1 minute. For 30 g/m$^2$ dry coat weight, the coating systems based on Epotal S 440 and Copolymer A were applied in 2 coats; first with the K3 bar, followed by 1 minute in the oven, then another coat with the K5 bar. The coating system based on Resin Emulsion A could not be overcoated. They were applied in a single pass with the K7 bar. Initial Cobb testing on some of the sheets showed a great dependence of properties as a function of drying time, therefore, the 30 g/m$^2$ coated sheets were allowed to dry in oven at 50 °C for approximately 2 hours.

Water resistance of the coatings was tested with the Cobb method, described by TAPPI T 441. A test area of 100 cm$^2$ was used, but in this case the testing time was 30 minutes instead of 2 minutes. MVTR was measured on the MOCON Permatran - W Water Vapor Permeation Measurement System. This instrument measures the transmission rate of water vapor through a substrate by keeping the atmosphere one side of the sample at a constant relative humidity while flooding the other side with a stream of dry nitrogen. The nitrogen flows past the substrate and then on to an IR detector which measures how much water has been picked up by the gas. The permeability of the uncoated base paper was too high to allow MVTR measurement by the MOCON Permatran - W Water Vapor Permeation Measurement System. The amount of water vapor that came through overwhelmed the instrument's detector. The MVTR of this sample was alternatively measured by the cup method (ASTM D 1653).

Table 9 denotes the 30 minute Cobb data at both 10 g/m$^2$ and 30 g/m$^2$ coat weights. Table 10 denotes MVTR values at 30 g/m$^2$ coat weight.

Table 9 - 30 minute Cobb data

| Coating | 30-minute Cobb @ 10 g/m$^2$ dry coat weight | 30-minute Cobb @ 30 g/m$^2$ dry coat weight |
|---|---|---|
| Epotal S 440 | 11.6 | NA |
| Epotal S 440 / Translink 37 | 11.5 | 3.6 |
| Epotal S 440 / Coarse Kaolin | 55.6 | 16.6 |
| Copolymer A | 77.1 | 3.4 |
| Copolymer A / Translink 37 | 37.7 | 3.5 |
| Copolymer A / Coarse kaolin | 96.3 | 56.4 |
| Resin Emulsion A | 12.9 | 0.0 |
| Resin Emulsion A / Translink 37 | 35.6 | 7.5 |
| Resin Emulsion A / Coarse kaolin | 47.3 | 5.4 |
| Bare substrate | 104.3 | |

The data showed that increasing coating weight improves the water resistance of the coated liner. In general, at a pigment to binder ratio of 1:1, the untreated coarse, platy kaolin does not provide the same level of water resistance as 100% resin. However, Translink 37 generally has a beneficial or comparable effect on water resistance depending on the resin used with it. Translink 37 and Epotal S 440 at 10 g/m$^2$ have water resistance comparable to 100% Epotal s 440 and 100% Resin Emulsion A. It is significantly better than 100% Copolymer A. The combination of coarse platy kaolin and Resin Emulsion A at 30 g/m$^2$ has exceptional performance. This higher coating weight, however, might prove uneconomical in manufacturing practice. The choice of using a filled/extended system must be weighted against the potential necessity of increasing the coating weight to achieve the desired properties. The Joncryl 3030 / Translink 37 gave results that would make this system viable for applications that require high level of water resistance.

For MVTR testing, the sheets coated with 30 g/m$^2$ dry coat weight were tested at tropical conditions; of 38 °C and 90% relative humidity.

Table 10 - MVTR Test Results

| Coating | MVTR at tropical conditions and @ 30 g/m$^2$ dry coat weight |
|---|---|
| Epotal S 440 | 409.5 |
| Epotal S 440 / Translink 37 | 830.9 |
| Epotal S 440 / Coarse kaolin | 277.2 |
| Copolymer A | 467.8 |
| Copolymer A / Translink 37 | 608.9 |
| Copolymer A / Coarse kaolin | 330.1 |
| Resin Emulsion A | 227.2 |
| Resin Emulsion A / Translink 37 | 1204 |
| Resin Emulsion A / Coarse kaolin | 442.1 |
| Bare substrate | 1439.7 |

In MVTR testing, Translink 37 does not appear to provide beneficial effects relative to the neat binders. The coarse, platy kaolin pigment demonstrates a beneficial effect on vapor transmission resistance when combined with Epotal S 440 and Copolymer A but not with Resin Emulsion A. It can be concluded that different coating formulations may be necessary to achieve desired liquid water resistance and water vapor barrier properties. To improve water resistance, a hydrophobically treated kaolin seems to work best when combined with the right resin like Epotal S 440. For vapor transmission resistance, a pigment that provides tortuousity, i.e., increases the path travelled by vapor as it penetrates and passes through the coating appears to be needed. The coarse, platy kaolin pigment used in this study appears to provide the tight particle packing needed and when used with the proper resin can enhance MVTR.

Example 6 - Dispersing Effect of Silanes, Siloxanes, and Poly-siloxane / Silicone resin blends on Styrene Acrylic Resin Emulsions

While assessing the benefits of hydrophobically surface treated pigment systems in water barrier applications, an unexpected finding was that silanes, siloxane, and poly-siloxane / silicone resin treatments have a beneficial dispersing effect on styrene acrylic resin emulsions. The resulting lower coating system viscosity offers multiple benefits - chief being the ability to increase pigment system loading with acceptable film forming capabilities. It also provides a needed degree of freedom to include additives that will improve coating efficiency and the quality of the film surface.

Table 11 demonstrated the benefits of this dispersion / coating system viscosity. Here, the coarse and platy kaolin pigment cited earlier was dried in the flocculated state (3.2 pH) and was hydrophobized by surface treatment with a commercially available siloxane hydrophobizing treatment (up to 2.0 percent by weight) supplied by Momentive Performance Materials. For comparison, the same kaolin pigment was left untreated and was also hydrophobized by magnesium stearate surface treatment (up to 3.0% by weight). Epotal S 440 was selected as the binder component of the coating systems.

The coating systems were prepared by weighing the Epotal S 440 and defoamer (Octafoam DFI -51 from Hi Mar Specialty Chemicals) into a small beaker. The beaker contents were mixed with a Dispermat mixer fitted with a saw toothed blade. Mixing speed was ramped up until a vortex was created at the agitator shaft. The pigment system was added gradually into the vortex, and once the full amount had been added, the mixing speed was increased to 1200 rpm and the slurry allowed to mix for 10 minutes. The total sample size was approximately 100g. Coating system solids were targeted at 59.0 percent. Brookfield viscosity was measured initially and after 24 hours to factor out the potential for entrained air biasing results as seen with siloxane treatment.

Table 11

| Coating System | Epotal S 440 | 1:1 Epotal S 440 / Coarse kaolin | 1:1 Epotal S 440 / Coarse kaolin + siloxane | 1:1 Epotal S 440 / Coarse kaolin + Magnesium Stearate |
|---|---|---|---|---|
| Coating System Solids | 46.0% | 58.3% | 59.0% | 59.0% |
| Initial Brookfield Viscosity No.3 @ 20 RPM | 1200 cps. | 2100 cps. | 1650 cps. | 2300 cps. |
| 24 Hour Brookfield Viscosity No.3 @ 20 RPM | 1250 cps. | 2300 cps. | 625 cps. | 2550 cps. |

The dispersion benefits seen with the siloxane surface treatment apply to a range of reactive silicone fluids. Silane substituent (i.e., vinyl-tris(2-methoxyethoxy)silane), siloxanes and poly-dimethylsiloxane / silicone resin blends were tested. To one practiced in the art, it should be readily apparent that this finding can be extended to carbon based analog chemistries as well as other compounds exhibiting similar performance characteristics. This dispersion benefit was seen in the range of styrene acrylic resin emulsions thus far tested in water barrier applications.

Example 7: Efficient Incorporation of Hydrophobic Pigment Systems in Styrene Butadiene Latex

During the development of novel water barrier coating systems, the industry suggested a need for a styrene butadiene latex based coating system. As stated in the aforementioned examples, a highly efficient water barrier coating system contains a hydrophobized pigment system or a hydrophobized styrene acrylic resin emulsion. To those skilled in the art, a hydrophobized pigment cannot be readily dispersed into a water based styrene butadiene latex. To facilitate this need in the marketplace, a novel method of pigment system incorporation has been developed which capitalizes on the enhanced dispersing effect of reactive silicone fluids such as silanes, siloxane, and poly-siloxane / silicone resin blends on styrene acrylic resin emulsions. (Example 6). The hydrophobized pigment system was first added to a styrene acrylic resin emulsion. This system was then readily dispersed into styrene butadiene latex.

The data in Table 12 demonstrates the performance of Translink 37 and a new hydrophobized water barrier pigment system that have been incorporated into a commercially available styrene butadiene latex (Epotal 4430). The new pigment system comprises thermally treated kaolin that has been hydrophobized by surface treatment with a poly-dimethylsiloxane / high molecular weight silicone resin blend (available from Dow Corning). The designation of this new product is Product 100. Product 100 exhibits improved water barrier properties (Cobb) when compared to Translink 37 in coating systems tested.

Product 100 is also considered to acceptable for food packaging, since the poly-dimethylsiloxane / high molecular weight silicone resin blend is compliant with food safety, as each of the individual substituents is approved by the FDA for applications in food..

Translink 37 and Product 100 were incorporated into Epotal 4430 using as little as 9.0 dry parts of styrene acrylic resin emulsion (Epotal S 440 in this example) to 100 parts of the pigment system. Chemical order of addition is critical. Mixing can be accomplished with a Dispermat mixer equipped with a saw tooth disk. First, approximately 80% of the required Epotal S 440 was added to the makeup water required for the coating system. The required Product 100 or Translink 37 pigment system was then added to this blend. These hydrophobized pigment systems floated but will readily incorporate when the remaining Epotal S 440 is added with agitation set at 2000 RPM. Complete incorporation was achieved without the need for other surfactants / defoamers within 5 minutes. The resulting slurry is stable. There is no preferential order of addition needed when adding the Epotal S 440 / pigment system slurry and target styrene butadiene latex (Epotal 4430 in this case). Only moderate agitation (1200 RPM) is required for efficient mixing. 0.1 parts defoamer (Octafoam DFI -51 from Hi Mar Specialty Chemicals) was added during this final mixing step to minimize the presence of entrained air in the costing system. A thickening aid (Sterocoll FD) was added to raise the coating system Brookfield viscosity above 500 cps.

Table 12

| Pigment System | Coating System Solids (%) | Brookfield Viscosity (2@100 RPM) | Hercules Viscosity @16 Dynes |
|---|---|---|---|
| Translink 37 | 57.0 | 80 | 960 RPM |
| Product 100 | 56.7 | 90 | 567 RPM |

Improved Sealability and Blocking of Coated Substrates

Coatings that provide a barrier to water, moisture, grease, oil, oxygen etc. must also have the ability to be form a seal and not block during the manufacturing process. For example, paper of paperboard used in a cup that will contain cold or hot liquids must be able to be sealed when the front and back sides of the paper or paperboard are joined and subjected to elevated temperature and pressure and the seal itself must also be resistant to liquid or moisture vapor and maintain its integrity in their presence. To further improve on the heat sealability of the coating systems of this invention, resin combinations were tested. Two pigments were evaluated in these studies: Product 101, a thermally treated kaolin pigment, and Product 100, a thermally treated kaolin pigment that has been hydrophobized by a commercially available poly-dimethylsiloxane / high molecular weight silicone resin blend.

The binder systems tested were composed of the following components:

- Epotal S 440: A commercially available a soft film forming SA emulsion from BASF Corporation. It is engineered for direct contact with food. The product pH was 8.0, Acid Number of 64, and a Tg(C) of -27°C.
- Binder A: A commercially available styrene acrylic emulsion from BASF Corporation. The product pH was 7.6 with an Acid Number of 57, and a Tg(C) of -4 °C.
- Epotal 4430: A commercially available aqueous dispersion of a carboxylated styrene/butadiene copolymer from BASF Corporation. Its target use is in the manufacture of laminating adhesives. It has outstanding mechanical, chemical stability and displays excellent adhesion.
- Binder B: A commercially available aqueous dispersion of a carboxylated styrene/butadiene copolymer from BASF Corporation.

These binder systems were selected and tested based on anticipated improvements in heat sealing due to $T_g$ or similarity to materials currently used in heat sealing processes.

Coatings were applied to the cup stock with wire wound bars on the K-Control Coater. The target dry coat weight was 5.7 g/m$^2$. In many cases, this was achieved with 2 layers of a coating at 40% solids with the K2 bar; in other cases, depending on the percent solids and viscosity or the presence of wax, other combinations of bars or a single layer coating was used. Coated sheets were dried 2 minutes at 50°C after each layer, then allowed to equilibrate in the constant temperature and humidity room for 2 days before testing.

Cobb testing was performed according to TAPPI test method T-441. The test area was 25cm$^2$ and the test time was 30 minutes. Four replicates of each condition were tested. Based on previous lab and trial work it was established that for hot cups a Cobb value of 12 g/m$^2$ was acceptable so any sample with performance equal or better than that material was considered acceptable in our testing.

Heat sealing was evaluated on a Sencorp model 12ASL/1 sealer. The temperature of both the top and bottom jaws was set at 600°F for all test conditions. Coated sheets were placed face to face and sealed at various times and pressures. The most common sealing times were 0.25, 0.35 and 0.5 seconds, based on information that cup sealing rates of 150 cups/minute (0.4 seconds/cup) was acceptable. Pressures were varied from 20 to 30 to 40 psi. After sealing and cooling to room temperature, the two pieces of board were pulled apart, and rated on the level of adhesion. Samples were given a rating of 1 to 5, based on the following scale:

1 - No adhesion
2 - Adhesion, but no picking or fiber tears
3 - Adhesion with coating transfer or slight fiber tear (<5% or surface area)
4 - Some fiber tear (5-50%)
5 - Fiber tear (>50%)

Since maximum adhesion at the lowest possible times and pressures was desirable, higher ratings are better.

Blocking resistance was evaluated with a Koehler Instruments block tester. The samples were cut into 1.5" x 1.5" pieces and placed face-to-face and face-to-back. A small metal plate with a circular hole was placed on top of the samples to keep them positioned, a spring with a circular metal face is then placed on top. The spring was compressed, in this case to 20mm, corresponding to a pressure of 15.2 psi, the test rig was then placed in a 50°C oven for 16 hours. At the end of that time, the rig was removed from the oven, and the samples were removed and allowed to cool to room temperature. Once cooled, the individual pieces were separated and the degree of adhesion noted. Samples were given a rating of 1 to 5, based on the following scale:

1 - No adhesion

2 - Slight adhesion

3 - Some adhesion, no material transfer between surfaces

4 - Strong adhesion, perhaps with material transfer between surfaces

5 - Fiber tear

In this case, because blocking in a coated roll should be minimized, lower ratings are better.

Example 8 - Evaluation of Binder Combinations

In this group of tests, the effects of different binders were evaluated. Binder A was used as a control because it is used in other heat seal applications, but not approved for direct food contact. In Table 13, Cobb and blocking test results are delineated for the binder combinations evaluated. The heat sealing results are reported in Table 14.

Table 13

| Description | Dry coat weight (g/m$^2$) | Cobb (g/m$^2$) | Face-to-face blocking (lower better) |
|---|---|---|---|
| PE - extruded commercial | N/A | 0.61 | 2 |
| Standard pigmented coating | N/A | 12.04 | 3 |
| Epotal S 440 | 5.7 | 6.45 | 2 |
| Binder A | 5.7 | 6.80 | 5 |
| Epotal S 440 + Epotal 4430 (75:25) | 5.7 | 5.26 | 3 |
| Epotal S 440 + Binder B (75:25) | 5.7 | 4.85 | 3 |

Table 14

| Time (sec) | PE at 20 PSI | PE at 30 PSI | PE at 40 PSI |
|---|---|---|---|
| 0.5 | 4 - 5 | 4 - 5 | 4 - 5 |
| 0.35 | 4 - 5 | 4 - 5 | 4 - 5 |
| 0.25 | 4 | 4 - 5 | 4 - 5 |
| Time (sec) | Standard Pigmented Coating at 20 PSI | Standard Pigmented Coating at 30 PSI | Standard Pigmented Coating at 40 PSI |
| 0.5 | 1 | 4 | 4 |
| 0.35 | 1 - 2 | 2 | - |
| 0.25 | 1 | 1 - 2 | - |
| | | | |
| Time (sec) | Epotal S 440 at 20 PSI | Epotal S 440 at 30 PSI | Epotal S 440 at 40 PSI |
| 0.5 | - | - | - |
| 0.35 | 3 | - | 5 |
| 0.25 | 3 | 3 | 4 |
| | | | |
| Time (sec) | Binder A at 20 PSI | Binder A at 30 PSI | Binder A at 40 PSI |
| 0.5 | 4 - 5 | 4 - 5 | 4 - 5 |
| 0.35 | 5 | 4 - 5 | 4 - 5 |
| 0.25 | 4 | 4 - 5 | 4 - 5 |
| | | | |
| Time (sec) | Epotal S 440 + Epotal 4430 at 20 PSI | Epotal S 440 + Epotal 4430 at 30 PSI | Epotal S 440 + Epotal 4430 at 40 PSI |
| 0.5 | 4 - 5 | 4 - 5 | 4 - 5 |
| 0.35 | 4 - 5 | 4 - 5 | 4 - 5 |
| 0.25 | 5 | 4 - 5 | 4 - 5 |
| | | | |
| Time (sec) | Epotal S 440 + Binder B at 20 PSI | Epotal S 440 + Binder B at 30 PSI | Epotal S 440 + Binder B at 40 PSI |
| 0.5 | 4 - 5 | 4 - 5 | 4 - 5 |
| 0.35 | 4 - 5 | 4 - 5 | 4 - 5 |
| 0.25 | 4 | 4 - 5 | 4 - 5 |

All of the coatings have acceptable Cobb values and all, but Binder A, have reasonably acceptable blocking. Epotal S 440 by itself as well as the other binders sealed better than the pigmented standard coating. The performance of the others showed that there is room to improve sealing performance by changing the binder system.

It might be expected that the addition of pigment will reduce the ability of the coating to seal, but may improve Cobb performance and reduce blocking. Two kaolin pigments were tested: Product 101 and Product 100. Each was dispersed with a Cowles blade in Epotal S 440 at a ratio of 55 parts kaolin : 45 parts resin solids, along with defoamer. Table 15 lists the systems tested and Table 16 the heat sealing results.

Table 15

| Description | Dry coat weight (g/m$^2$) | Cobb (g/m$^2$) | Face-to-face blocking (lower better) |
|---|---|---|---|
| 100 % Epotal S 440 | 5.7 | 6.45 | 2 |
| Pigmented coating (Epotal S 440 + kaolin) | N/A | 12.04 | 3 |
| 45% Epotal S 440 + 55% Product 100 | 5.7 | 5.35 | 1.5 |
| 45% Epotal S 440+ 55% Product 101 | 5.7 | 13.59 | 1.5 |

The combination of Epotal S 440 and Product 100(hydrophobically surface treated calcined kaolin) gave superior Cobb values to the untreated calcined kaolin. However, all systems gave acceptable Cobb results for cold and hot cup applications. The pigmented systems gave superior blocking results.

Table 16

| Time (sec) | Epotal S 440 at 20 PSI | Epotal S 440 at 30 PSI | Epotal S 440 at 40 PSI |
|---|---|---|---|
| 0.5 | - | - | 4 - 5 |
| 0.35 | 3 | - | 5 |
| 0.25 | 3 | 3 | 4 |
| Time (sec) | Pigmented Standard at 20 PSI | Pigmented Standard at 30 PSI | Pigmented Standard at 40 PSI |
| 0.5 | 1 | 4 | 4 |
| 0.35 | 1 - 2 | 2 | - |
| 0.25 | 1 | 1 - 2 | 1 - 2 |
|  |  |  |  |
| Time (sec) | Epotal S 440 + Product 101 at 20 PSI | Epotal S 440 + Product 101 at 30 PSI | Epotal S 440 + Product 101 at 40 PSI |
| 0.5 | 1 | 2 | 3 |
| 0.35 | 1 - 2 | 1 - 2 | 1 - 2 |
| 0.25 | 1-2 | 1 - 2 | 1 - 2 |
|  |  |  |  |
| Time (sec) | Epotal S 440 + Product 100 at 20 PSI | Epotal S 440 + Product 100 at 30 PSI | Epotal S 440 + Product 100 at 40 PSI |
| 0.5 | 2 | 3 | 4 |
| 0.35 | 1 | 2 | 2 |
| 0.25 | 1 - 2 | 1 - 2 | 1 - 2 |

The heat seal results indicate that the addition of kaolin pigment in a 55:45 ratio negatively impacts heat sealability overall, resulting in less adhesion at each sealing condition when compared with Epotal S 440 by itself but yields results comparable to the Pigmented, Standard.

Blends of Epotal S 440 and Epotal 4430 were next tested (Table 17 and Table 18) to evaluate the effect of the binder system on heat sealability. A 75:25 blend of Epotal S 440 and Epotal 4430 (referred to as "Binder 1") and a blend of 43:57 75:25 blend of Epotal S 440 and Epotal 4430 ("Binder 2"). The kaolin pigment system was dispersed in each coating system at a pigment to binder ratio of 55:45.

Table 17

| Description | Dry coat weight (g/m$^2$) | Cobb (g/m$^2$) | Blocking (lower better) |
|---|---|---|---|
| Epotal S 440 + Product 100 | 5.7 | 5.35 | 1.5 |
| Binder 1 + Product 100 | 5.7 | 3.80 | 2 |
| Binder 2 + Product 100 | 5.7 | 3.97 | 3 |

Table 18

| Time (sec) | Epotal S 440 + Product 100 at 20 PSI | Epotal S 440 + Product 100 at 30 PSI | Epotal S 440 + Product 100 at 40 PSI |
|---|---|---|---|
| 0.5 | 2 | 3 | 4 |
| 0.35 | 1 | 2 | 2 |
| 0.25 | | | |

| Time (sec) | Binder 1 + Product 100 at 20 PSI | Binder 1 + Product 100 at 30 PSI | Binder 1 + Product 100 at 40 PSI |
|---|---|---|---|
| 0.5 | 3 | 5 | |
| 0.35 | 3 | 3 | 4 |
| 0.25 | 1 | 1 | 2 |

| Time (sec) | Binder 2 + Product 100 at 20 PSI | Binder 2 + Product 100 at 30 PSI | Binder 2 + Product 100 at 40 PSI |
|---|---|---|---|
| 0.5 | 2 | 5 | |
| 0.35 | 2 | 3 | 3 |
| 0.25 | | | |

A blend of 75:25 parts Epotal S 440 and Epotal 4430 performs slightly better than the blend with more Epotal 4430.

The best formulation tested is comprised of 75:% Epotal S 440 / 25% Epotal 4430 binder system at a pigment to binder ratio 55:45 with Product 100 hydrophobically treated kaolin. This represents an improvement over the performance of the straight Epotal S 440 / kaolin system.

While the invention has been disclosed with reference to specific embodiments, it is apparent that other embodiments and variations of this invention may be devised by others skilled in the art without departing from the true spirit and scope of the invention. The appended claims are intended to be construed to include all such embodiments and equivalent variations.

**Claims**

1. A method for preparing an aqueous based coating system for coating onto paper and/or paperboard for providing barrier to liquid, moisture vapor, oil and grease, which comprises mixing a polymer emulsion system or natural-based binding system with a pigment system,
   wherein the coating system comprises surface treating a pigment prior to mixing the pigment system with the polymer emulsion system or natural binding system,
   which comprises surface treating the pigment with materials selected from the group consisting of hydrophobically modified polymers, styrene-acrylic resin emulsion, styrene-butadiene latex emulsions, blends of styrene acrylic and styrene butadiene latex emulsions, and silanes, siloxanes, siloxane / silicone resin blends, and their carbon-based analogs.

**2.** The method of claim 1, wherein a component of the pigment system has been modified by a thermal treatment process.

**3.** The method of claim 1 or 2, wherein the pigment system comprises at least one inorganic material selected from kaolin, bentonite, mica, talc, attapulgite, and zeolite, and preferably comprises kaolin pigment.

**4.** An aqueous based coating system for coating onto paper and/or paperboard for providing barrier to liquid, moisture vapor, oil and grease, which comprises a polymer emulsion system or natural-based binding system and a pigment system,
wherein the pigment has been surface treated prior to mixing with the polymer emulsion system or natural-based binding system,
wherein the pigment has been surface treated with materials selected from the group consisting of hydrophobically-modified polymers, styrene-acrylic resin emulsion, styrene-butadiene latex emulsions, blends of styrene acrylic and styrene butadiene latex emulsions, and silanes, siloxanes, siloxane / silicone resin blends, and their carbon-based analogs.

**5.** The aqueous based coating system of claim 4, wherein a pigment of the pigment system has been modified by a thermal treatment process.

**6.** The aqueous based coating system of claim 4 or 5, wherein the pigment system comprises at least one inorganic material selected from kaolin, bentonite, mica, talc, attapulgite, and zeolite, and preferably comprises kaolin pigment.

**7.** The aqueous based coating system of claim 4, comprising a pigment system, a crosslinker, a polymer emulsion or natural-based binding system that has been hydrophobized by the addition of materials selected from the group consisting of silanes, siloxanes, siloxane / silicone resin blends, and their carbon-based analogs and optionally, a defoaming agent,
wherein one or more components of the pigment system has been surface treated.

**8.** The aqueous based coating system of claim 7, comprising thermal treating a component of the pigment system.

**9.** The aqueous based coating system of claim 7, wherein the pigment system comprises surface treated kaolin having a particle size of at least 20% by weight finer than 2 micrometers.

**10.** The aqueous based coating system of claim 7, wherein the pigment system comprises kaolin that is acid flocked, dried and pulverized.

**11.** The aqueous based coating system of claim 4, comprising a hydrophobized pigment system; a water based binder system, a defoaming agent, a thickening agent and optionally, a crosslinker.

**12.** The aqueous based coating system of claim 4, comprising a pigment system whereby a pigment in the pigment system has been thermally treated prior to surface treatment with a polydimethylsiloxane / high molecular weight silicone resin blend.


**Patentansprüche**

**1.** Verfahren zur Herstellung eines wasserbasierten Beschichtungssystems zum Auftragen auf Papier und/oder Karton zur Bereitstellung einer Barriere gegenüber Flüssigkeit, Feuchtigkeitsdampf, Öl und Fett, bei dem man ein Polymeremulsionssystem oder Bindemittelsystem auf natürlicher Basis mit einem Pigmentsystem mischt,
wobei das Beschichtungssystem die Oberflächenbehandlung eines Pigments vor dem Mischen des Pigmentsystems mit dem Polymeremulsionssystem oder natürlichen Bindemittelsystem umfasst,
bei dem man das Pigment mit Substanzen ausgewählt aus der Gruppe bestehend aus hydrophob modifizierten Polymeren, Styrol-Acryl-Harz-Emulsionen, Styrol-Butadien-Latexemulsionen, Mischungen von Styrol-Acryl- und Styrol-Butadien-Latexemulsionen und Silanen, Siloxanen, Siloxan/Silikonharz-Mischungen und deren Kohlenstoff-basierten Analogen oberflächenbehandelt.

**2.** Verfahren nach Anspruch 1, bei dem eine Komponente des Pigmentsystems durch einen Wärmebehandlungsprozess modifiziert worden ist.

**3.** Verfahren nach Anspruch 1 oder 2, bei dem das Pigmentsystem mindestens eine anorganische Substanz, die aus Kaolin, Bentonit, Glimmer, Talk, Attapulgit und Zeolith ausgewählt ist, umfasst und vorzugsweise Kaolin-Pigment umfasst.

**4.** Wasserbasiertes Beschichtungssystem zum Auftragen auf Papier und/oder Karton zur Bereitstellung einer Barriere gegenüber Flüssigkeit, Feuchtigkeitsdampf, Öl und Fett, umfassend ein Polymeremulsionssystem oder Bindemittelsystem auf natürlicher Basis und ein Pigmentsystem, wobei das Pigment vor dem Mischen mit dem Polymeremulsionssystem oder dem Bindemittelsystem auf natürlicher Basis oberflächenbehandelt worden ist, wobei das Pigment mit Substanzen aus der Gruppe bestehend aus hydrophob modifizierten Polymeren, Styrol-Acryl-Harz-Emulsionen, Styrol-Butadien-Latexemulsionen, Mischungen von Styrol-Acryl- und Styrol-Butadien-Latexemulsionen und Silanen, Siloxanen, Siloxan/Silikonharz-Mischungen und deren Kohlenstoff-basierten Analogen oberflächenbehandelt worden ist.

**5.** Wasserbasiertes Beschichtungssystem nach Anspruch 4, wobei ein Pigment des Pigmentsystems durch einen Wärmebehandlungsprozess modifiziert worden ist.

**6.** Wasserbasiertes Beschichtungssystem nach Anspruch 4 oder 5, wobei das Pigmentsystem mindestens eine anorganische Substanz, die aus Kaolin, Bentonit, Glimmer, Talk, Attapulgit und Zeolith ausgewählt ist, umfasst und vorzugsweise Kaolin-Pigment umfasst.

**7.** Wasserbasiertes Beschichtungssystem nach Anspruch 4, umfassend ein Pigmentsystem, einen Vernetzer, ein Polymeremulsionssystem oder Bindemittelsystem auf natürlicher Basis, das durch Zusatz von Substanzen aus der Gruppe bestehend aus Silanen, Siloxanen, Siloxan/Silikonharz-Mischungen und deren Kohlenstoff-basierten Analogen hydrophobiert worden ist, und gegebenenfalls einen Entschäumer, wobei eine oder mehrere Komponenten des Pigmentsystems oberflächenbehandelt worden sind.

**8.** Wasserbasiertes Beschichtungssystem nach Anspruch 7, umfassend die Wärmebehandlung einer Komponente des Pigmentsystems.

**9.** Wasserbasiertes Beschichtungssystem nach Anspruch 7, wobei das Pigmentsystem oberflächenbehandelten Kaolin mit einer Teilchengröße von mindestens 20 Gew.-% feiner als 2 Mikrometer umfasst.

**10.** Wasserbasiertes Beschichtungssystem nach Anspruch 7, wobei das Pigmentsystem mit Säure ausgeflockten, getrockneten und pulverisierten Kaolin umfasst.

**11.** Wasserbasiertes Beschichtungssystem nach Anspruch 4, umfassend ein hydrophobiertes Pigmentsystem; ein wasserbasiertes Bindemittelsystem, einen Entschäumer, einen Verdicker und gegebenenfalls einen Vernetzer.

**12.** Wasserbasiertes Beschichtungssystem nach Anspruch 4, umfassend ein Pigmentsystem, wobei ein Pigment in dem Pigmentsystem vor der Oberflächenbehandlung mit einer Mischung von Polydimethylsiloxan und hochmolekularem Silikonharz wärmebehandelt worden ist.

## Revendications

**1.** Procédé de préparation d'un système de revêtement à base aqueuse à déposer sur du papier et/ou du carton pour fournir une barrière aux liquides, à la vapeur d'eau d'humidité, aux huiles et aux graisses, qui comprend le mélange d'un système d'émulsion de polymère ou d'un système liant à base naturelle avec un système de pigments, le système de revêtement comprenant le traitement de surface d'un pigment avant le mélange du système de pigments avec le système d'émulsion de polymère ou le système liant naturel, qui comprend le traitement de surface du pigment avec des matériaux choisis dans le groupe constitué par les polymères modifiés hydrophobiquement, les émulsions de résine styrène-acrylique, les émulsions de latex styrène-butadiène, les mélanges d'émulsions styrène-acrylique et latex styrène-butadiène, et les silanes, les siloxanes, les mélanges siloxane/résine de silicone, et leurs analogues à base de carbone.

**2.** Procédé selon la revendication 1, dans lequel un composant du système de pigments a été modifié par un procédé de traitement thermique.

3. Procédé selon la revendication 1 ou 2, dans lequel le système de pigments comprend au moins un matériau inorganique choisi parmi le kaolin, la bentonite, le mica, le talc, l'attapulgite et la zéolithe, et comprend de préférence un pigment de kaolin.

4. Système de revêtement à base aqueuse à déposer sur du papier et/ou du carton pour fournir une barrière aux liquides, à la vapeur d'eau d'humidité, aux huiles et aux graisses, qui comprend un système d'émulsion de polymère ou un système liant à base naturelle et un système de pigments,
le pigment ayant été traité en surface avant le mélange avec le système d'émulsion de polymère ou le système liant à base naturelle,
dans lequel le pigment a été traité en surface avec des matériaux choisis dans le groupe constitué par les polymères modifiés hydrophobiquement, les émulsions de résine styrène-acrylique, les émulsions de latex styrène-butadiène, les mélanges d'émulsions styrène-acrylique et latex styrène-butadiène, et les silanes, les siloxanes, les mélanges siloxane/résine de silicone, et leurs analogues à base de carbone.

5. Système de revêtement à base aqueuse selon la revendication 4, dans lequel un pigment du système de pigments a été modifié par un procédé de traitement thermique.

6. Système de revêtement à base aqueuse selon la revendication 4 ou 5, dans lequel le système de pigments comprend au moins un matériau inorganique choisi parmi le kaolin, la bentonite, le mica, le talc, l'attapulgite et la zéolithe, et comprend de préférence un pigment de kaolin.

7. Système de revêtement à base aqueuse selon la revendication 4, comprenant un système de pigments, un agent de réticulation, un système d'émulsion de polymère ou liant à base naturelle qui a été rendu hydrophobe par l'addition de matériaux choisis dans le groupe constitué par les silanes, les siloxanes, les mélanges siloxane/résine de silicone et leurs analogues à base de carbone, et éventuellement un agent antimousse,
un ou plusieurs composants du système de pigments ayant été traités en surface.

8. Système de revêtement à base aqueuse selon la revendication 7, comprenant le traitement thermique d'un composant du système de pigments.

9. Système de revêtement à base aqueuse selon la revendication 7, dans lequel le système de pigments comprend du kaolin traité en surface ayant une taille de particules pour au moins 20 % en poids plus fine que 2 micromètres.

10. Système de revêtement à base aqueuse selon la revendication 7, dans lequel le système de pigments comprend du kaolin qui est floculé en milieu acide, séché et pulvérisé.

11. Système de revêtement à base aqueuse selon la revendication 4, comprenant un système de pigments rendu hydrophobe, un système liant à base d'eau, un agent antimousse, un épaississant, et éventuellement un agent de réticulation.

12. Système de revêtement à base aqueuse selon la revendication 4, comprenant un système de pigments, un pigment dans le système de pigments ayant été traité thermiquement avant le traitement de surface avec un mélange polydiméthylsiloxane/résine de silicone à haut poids moléculaire.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010052571 A2
- WO 2010042162 A1
- WO 2009134538 A1
- US 4686260 A